# EUROPÄISCHE PATENTSCHRIFT

(11) **EP 0 672 857 B1**
(45) Veröffentlichungstag und Bekanntmachung des Hinweises auf die Patenterteilung: **10.02.1999**
(21) Anmeldenummer: 95103136.8
(22) Anmeldetag: 05.03.1995
(51) Int. Cl.: F16L 27/04

(54) **Gelenkrohr**
Articulated pipe
Conduite articulée

(30) Priorität: 16.03.1994 DE 4409022
(43) Veröffentlichungstag der Anmeldung: 20.09.1995
(73) Patentinhaber: gabo Systemtechnik GmbH, 94327 Bogen (DE)
(72) Erfinder: Bauer, Peter, D-94357 Konzell (DE); Helf, Walter, D-94315 Straubing (DE); Lederer, Roland, D-93049 Regensburg (DE)

(56) Entgegenhaltungen:
- EP-A- 0 213 384
- GB-A- 2 156 932

## Beschreibung

Die Erfindung bezieht sich auf ein Gelenkrohr für Kabelkanalrohrzüge oder dergl., das aus Einzelrohren zusammengesetzt ist, wobei die endständigen Rohre eine Muffe bzw. ein Einsteckende aufweisen und aus Gelenkmuffen und Gelenkkugeln bestehende sphärische Gelenke zwischen den einzelnen Rohren vorgesehen sind, die durch ein im Gelenkbereich angeordnetes Dichtelement druckdicht abgedichtet sind.

Der Einbau von Gelenkrohren in Kabelkanalrohrzüge empfiehlt sich immer dann, wenn diese um Hindernisse herum oder aus sonstigen Gründen im Bogen verlegt werden müssen und der Einbau von händisch vorgeformten Rohrbögen wegen deren starrer Abmessungen nicht möglich ist.

Gattungsgemäße Gelenkrohre sind an sich bekannt. Beispielsweise offenbart die DE-OS 35 26 704 (EP 86 11 03 14.1) ein Gelenkelement für Kabelkanalrohrtrassen, das aus einem Rohrstück besteht, dessen Ende kalottenförmig aufgeweitet ist und in das ein Rohrstück eingeschoben ist, dessen Ende dieser kalottenförmigen Aufweitung entsprechend leicht verdickt ist und von innen nach außen leicht verjüngt verläuft. Außerdem ist eine Dichtung im Gelenkbereich vorgesehen und ein Überwurfring mit Anschlag am Ende der kalottenartigen Aufweitung. Ein zweiter Anschlag befindet sich innen an der Wurzel der kalottenförmigen Aufweitung. Ein Überwurfring ist bei mehrgliedrigen Bögen jedoch nicht anwendbar, da die Mittelteile beidseitig einen Bund mit größerem Außendurchmesser als der Innendurchmesser des Überwurfringes ist, aufweisen.

Ein weiterer flexibler Rohrbogen mit einem in dessen Muffenbereich vorgesehenen äußeren Wulst und einer inneren Einlauffläche geht aus der DE-GM 92 16 784.5 hervor.

Die CH-PS 669 982 zeigt ebenfalls eine dichte Gelenkvorrichtung für zylindrische Rohre, wobei durch zwei am Anfang und Ende eines jeden Rohrstückes angeformte, teilweise runde und ineinandergreifende Gelenkteile ein Kugelgelenk gebildet ist. Eine solcherart aufgebaute Gelenkvorrichtung weist den Nachteil geringer Festigkeit auf Zug- und Biegebeanspruchungen auf.

Aus der GB-A-2 156 932 geht ein Gelenkrohr gemäß dem Oberbegriff des Anspruchs 1 hervor, das eine Gelenkkugel und eine Gelenkmuffe aufweist, die umeinander schwenkbar sind.

Wenn des Gelenkrohr aus dünnem Metallblech besteht, ist es für Auspuffrohren von Kraftfahrzeugen geeignet.

Der Erfindung, wie sie in den Ansprüchen beschrieben ist, liegt die Aufgabe zugrunde, ein gattungsgemäßes Gelenkrohr zu schaffen, daß eine druckdichte, sphärische Verbindung für mehrgliedrige Rohrelemente aufweist und bei dem ein Herauslösen des Gelenkes, bzw. dessen Gelenkkugel, unter Beanspruchung bei der Verlegung des Kabelkanalrohrzuges und evtl. späterer Belastung, wie z.B. Verkehrslasten etc., nicht möglich ist und das Gelenkrohr eine hohe Festigkeit gegen Biegekräfte aufweist.

Die mit der Erfindung erzielten Vorteile liegen insbesondere darin, daß die Biegesteifigkeit des Gelenkrohres und damit des gesamten im Bogen verlegten Kabelkanalrohrzuges, gegenüber den bekannten Gelenkrohren, wesentlich erhöht ist und die Auslenkung des Gelenkes durch unterschiedliche Anschläge, die die Grenzlagen des Gelenkes darstellen, auf ein sicheres Maß beschränkt ist und darin, daß die Rohrverbindung in dem Gelenk verrastet, also unlösbar ist. Eine zerstörungsfreie Lösung der Gelenkverbindung ist nicht mehr möglich. Schließlich ist eine wirtschaftliche Fertigung und Verlegung dieser Gelenkbogen von Vorteil.

Die Erfindung ist nachstehend anhand eines in den Abbildungen dargestellten Ausführungsbeispieles näher erläutert.

Es zeigt:
Fig. 1 einen Längsschnitt durch einen Rohrbogen,

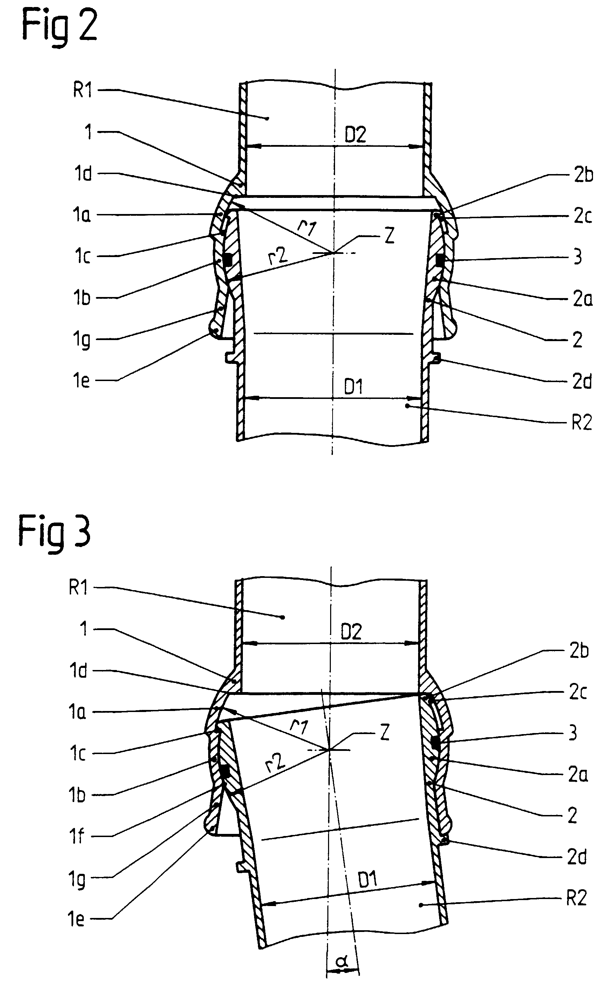

Fig. 2 einen Längsschnitt durch ein Gelenk ohne und
Fig. 3 einen Längsschnitt durch ein Gelenk mit Auslenkung.

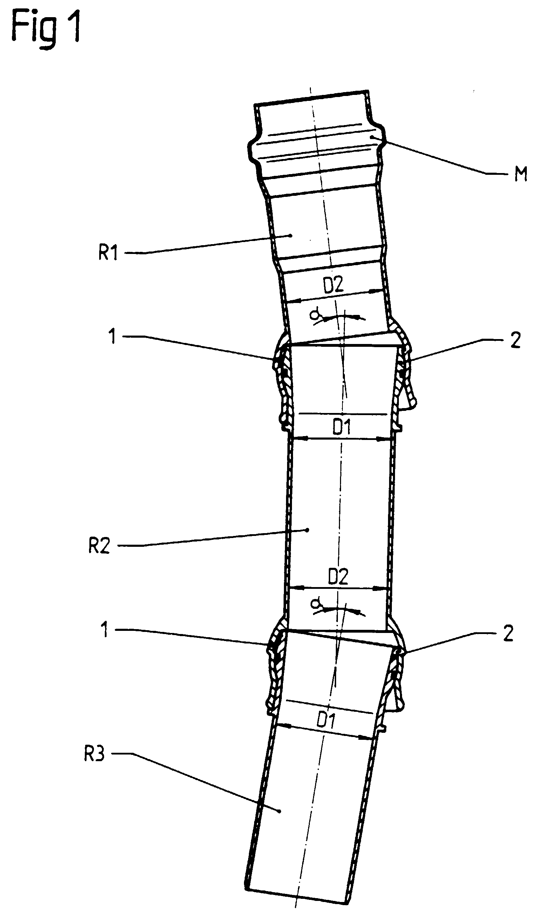

Die Fig 1 zeigt einen Rohrbogen aus mehreren Rohren R1, R2, R3 bestehend, wobei die einzelnen Rohre R1, R2, R3 entweder, wie das Rohr R1, auf einer Seite eine normale Muffe und auf der anderen Seite eine sphärische Gelenkmuffe 1 besitzen, oder wie das Rohr R2, auf einer Seite eine sphärische Gelenkkugel 2 und auf der anderen Seite eine entsprechend ausgebildete Gelenkmuffe 1, bzw. wie das Rohr R3, das z.B. wie das Rohr R1 oder R2 ausgebildet ist oder auf einer Seite eine Gelenkkugel und auf der anderen Seite ein Einsteckende besitzt.

Die Gelenkmuffe 1 ist in zwei Abschnitte 1a, 1b mit unterschiedlichem Innenradius r1, r2 aufgeteilt, wobei beide Abschnitte durch einen Absatz 1c, der beispielsweise ringförmig oder kegelstumpfförmig ausgebildet sein kann, getrennt sind. Der Abschnitt 1c dient als Anschlag für den Abschnitt 2b der Gelenkkugel 2, der einen Außenradius r1 aufweist, der dem Innenradius r1 des Abschnittes 1a der Gelenkmuffe 1 entspricht.

Die Gelenkkugel 2 besitzt weiterhin einen Absatz 2c zwischen ihren beiden Abschnitten 2a, 2b, der gleichzeitig als Anschlag dient.

Der Dichtring 3 ist in in bekannter Weise in eine entsprechende Nut der Gelenkkugel 2 eingesetzt und dichtet die Gelenkmuffe 1 mit ihrem Abschnitt 1b, der den geringeren Radius r2 aufweist gegenüber dem Abschnitt 2a der Gelenkkugel, der ebenfalls den geringeren Radius r2 aufweist druckdicht ab. Dieser Dichtring 3 verläßt beim Gleiten der Gelenkkugel 2 mit Ihrem Abschnitt 2a auf dem Abschnitt 1b der Gelenkmuffe 1 beim Abwinkeln der beiden Rohre R1 und R2 gegeneinander nie den Bereich der geringeren Innen- bzw. Außenradius r2, wodurch eine permanente Dichtwirkung gewährleistet ist. Die Begrenzung der Abwinklung geschieht durch die beiden als Anschläge dienenden Absätze 1c bzw. 2c zwischen den Abschnitten größeren und kleineren Radius' der Gelenkmuffe 1 und der Gelenkkugel 2.

Das Einsteckende des Rohres R2 kann unterhalb dessen Gelenkkugel mit einem Ring 2d versehen sein, vor den sich beim Abwinkeln beider Rohre R1 und R2 gegeneinander der etwas verdickte Muffenrand 1g mit seinem verdickten Rand 1e legt.

Beim Abwinkeln der beiden Rohre R1 und R2 bzw. R2 und R3 gegeneinander gleitet der Abschnitt 2a des Rohres R2 auf dem inneren Mantelabschnitt 1a und der Abschnitt 2b auf dem inneren Mantelabschnitt 1b der Gelenkmuffe 1 ggfl. bis zur Extremposition, wo die Bewegung beider Rohre R1 und R2 durch die Absätze 1c und 1d an die der Absatz 2c in der Extremposition anschlägt, begrenzt wird. Die Gelenkmuffe 1 und die Gelenkkugel 2 besitzen ein gemeinsames Zentrum Z, um das die Drehbewegung des Gelenkes erfolgt. Mit der kongruenten Ausbildung der Oberflächen der sich jeweils gegenüberliegenden sphärischen Abschnitte 1a-2b bzw. 1b-2a der beiden Rohre R1 und R2, bzw. R2 und R3 ist ein exaktes Gleiten, Begrenzen deren Bewegung bis in die Extrempositionen um den Auslenkungswinkel und das Abdichten derselben gegeneinander gewährleistet. Der aus Festigkeitsgründen etwas verstärkte Muffenrand 1e legt sich in dieser Position vor den Ring 2d des Rohres R2. In der Fig. 1 sind drei Rohre R1, R2, und R3 dargestellt, von denen das Rohr R1 ein endständiges Rohr mit einer Anschlußmuffe M für ein weiters Rohr des Kabelkanalrohrzuges ohne Gelenk. Die Anzahl der Rohre in einem solchen Rohrgelenk hängt von dem Radius und der Länge des Bogens ab. Es sind mindestens zwei Rohre, die gelenkmäßig durch eine Gelenkmuffe 1 und eine Gelenkkugel 2 miteinander verbunden sind, notwendig. Im Normalfall werden jedoch mindestens drei Rohre R1,R2,R3 zum Einsatz kommen, von denen das mittlere Rohr R2 auf einer Seite eine Gelenkmuffe 1 und auf der anderen Seite eine Gelenkkugel 2 besitzt. Die beiden endständigen Rohre R1 bzw. R3 besitzen dann entsprechend auf einer Seite eine bekannte Muffe M oder ein, in den Abbildungen nicht dargestelltes, bekanntes Einsteckende.

Die Verbindung zwischen einer Gelenkmuffe 1 und einer Gelenkkugel 2 ist, nach Eindrücken der Gelenkkugel in den Eintrittsquerschnitt der Gelenkmuffe und Einschnappen des Abschnittes 2b derselben hinter deren Absatz 1c der Gelenkmuffe 1 verrastet und unlösbar. Ein Lösen der Verbindung ist zerstörungsfrei nicht mehr möglich. Der Abschnitt 2b kann beispielsweise auch als unterbrochener Ring oder Teilring ausgebildet sein.

## Patentansprüche

1. Gelenkrohr für Kabelkanalrohrzüge oder dergl., das aus Einzelrohren zusammengesetzt ist, wobei die endständigen Rohre eine Muffe bzw. ein Einsteckende aufweisen und aus Gelenkmuffen (1) und Gelenkkugeln (2) bestehende sphärische Gelenke zwischen den einzelnen Rohren vorgesehen sind, die Gelenkmuffe wie die Gelenkkugel zwei unterschiedliche Abschnitte mit unterschiedlichen Radien besitzt, während diese jeweils einen gemeinsamen Innen- bzw. Außenradius aufweisen und die Abschnitte mit jeweils gleichen Radien sich gegenüberliegen und die Gelenkmuffe (1) und die Gelenkkugel (2) ein gemeinsames Zentrum (Z), um das die Drehbewegungen erfolgen, besitzen, wobei die Gelenkmuffe (1) und die Gelenkkugel (2) miteinander unlösbar verrastet sind, **dadurch gekennzeichnet**, daß die Gelenke durch ein im Gelenkbereich angeordnetes Dichtelement (3) druckdicht abgedichtet sind, die Innenflächen der Muffenabschnitte (1a,1b) der Gelenkmuffe (1) und die Außenflächen der Kugelabschnitte (2a,2b) der Gelenkkugel (2) als Gleitflächen für den jeweils gegenüberliegenden Abschnitt ausgebildet und die Absätze (1c,2c) als Anschläge zwischen den Muffenabschnitten (1a,1b) und Kugelabschnitten (2a,2b) vorgesehen sind sowie ein Absatz (1d) zwischen dem Rohrkörper (R1) und dem Muffenabschnitt (1a) vorgesehen ist, während sich an den Muffenabschnitt (1b) ein nach außen gerichteter konischer Endabschnitt (1g) anschließt.

2. Gelenkrohr nach Anspruch 1, **dadurch gekennzeichnet**, daß die beiden Muffenabschnitte (1a),(1b) der Gelenkmuffe (1) so ineinander übergehen, daß der rohrseitige von einem Anschlag (1d) ausgehende Muffenabschnitt (1a) den größeren Radius (r1), der muffenendseitige Abschnitt (1b) den kleineren Radius (r2) aufweist, die Gelenkkugel (2a) des Einsteckrohres (R2) einen rohrseitigen Kugelabschnitt (2a) mit einer der Innenkontur des Muffenabschnittes (1b) entsprechenden Außenkontur und einen äußeren ringförmigen Kugelabschnitt (2b) mit einer der Innenkontur des Muffenabschnittes (1a) entsprechenden Außenkontur besitzt, wobei die Gleitbewegung des Gelenkes in den beiden Endlagen mittels der Anschläge (1c) und (1d) für den ringförmigen Abschnitt (2b) der Gelenkkugel (2) begrenzt ist.

3. Gelenkrohr nach Anspruch 1 und 2, **dadurch gekennzeichnet**, daß der Absatz (1c) kreisringförmig ausgebildet ist.

4. Gelenkrohr nach Anspruch 1 bis 3, **dadurch gekennzeichnet**, daß der Absatz (1c) kegelstumpfförmig ausgebildet ist.

5. Gelenkrohr nach Anspruch 1 bis 4, **dadurch gekennzeichnet**, daß am Einsteckrohrende (R2) ein Anschlag (2d) für den Endabschnitt (1g) der einem Wulst (1e) zur Erhöhung der Festigkeit der Gelenkmuffe (1) des Muffenrohres (R1) vorgesehen ist, der gleichzeitig als Anschlag dient.

6. Gelenkrohr nach Anspruch 1 bis 5, **dadurch gekennzeichnet**, daß der Innendurchmesser (D1) des Rohres (R1) gleich dem Innendurchmesser (D2) des Rohres (R2) ist und bei maximaler Auslenkung des Muffenrohres (R1) gegen das Einsteckrohrende (R2) um den Winkel α die innere Mantellinie der kelchförmigen Erweiterung der Gelenkkugel (2a) am Absatz (1d) in die innere Mantellinie des Muffenrohres (R1) mündet.

7. Gelenkrohr nach Anspruch 1 bis 6, **dadurch gekennzeichnet**, daß der ringförmige Abschnitt (2b) der Gelenkkugel (2) auf der Innenkontur des inneren Muffenabschnittes (1a) der Muffe (1) und die Gelenkkugel (2a) auf der Innenkontur des äußeren Muffenabschnittes (1b) der Muffe (1) gleitet.

8. Gelenkrohr nach Anspruch 1 bis 7, **dadurch gekennzeichnet**, daß dessen Teile aus einem in bestimmten Grenzen elastischen Kunststoff bestehen, und daß die Gelenkkugel (2) und die Gelenkmuffe (1) miteinander unlösbar verrasten, wobei mindestens der Außendurchmesser der Eintrittsquerschnitt (1f) der Gelenkmuffe (1) etwas kleiner als der Durchmesser der Gelenkkugel (2) ist und der Abschnitt (2b) der Gelenkkugel (2) hinter den Absatz (1c) der Gelenkmuffe (1) schnappt.

9. Gelenkrohr nach Anspruch 1 bis 8, **dadurch gekennzeichnet**, daß der Abschnitt (2b) der Gelenkkugel (2) als unterbrochener Ring ausgebildet ist.

10. Gelenkrohr nach Anspruch 1 bis 9, **dadurch gekennzeichnet**, daß der Absatz (1c) als unterbrochener Ring ausgebildet ist.

## Claims

1. An articulated pipe for cable duct pipe sections or the like which is assembled from individual pipes, the terminating pipes having a sleeve or an insertion end and spherical joints comprising articulation sleeves (1) and articulation balls (2) between the individual pipes, the articulation sleeve and the articulation ball having two different sections with different radii, whereas each of these has a common internal and external radius and each of the sections with different radii is opposite the other and the articulation sleeve (1) and the articulation ball (2) have a common centre (Z) about which the rotational movements take place, with the articulation sleeve (1) and the articulation ball (2) being clipped together in such a way as to prevent them from being separated, **characterised in that** the joints are given a pressure-tight seal by a seal element arranged in the area of articulation, the internal surfaces of the sleeve sections (1a, 1b) of the articulation sleeve (1) and the external surfaces of the ball sections (2a, 2b) of the articulation ball (2) are in each case formed as sliding surfaces for the opposing section and the shoulders (1c, 2c) are provided as stops between the sleeve sections (1a, 1b) and ball sections (2a, 2b) as well as a shoulder (1d) being provided between the pipe body (R1) and the sleeve section (1a), with an externally oriented conical end section (1g) connected to the sleeve section (1b).

2. The articulated pipe in accordance with claim 1, **characterised in that** the transition between the two sleeve sections (la, 1b) of the articulation sleeve (1) is such that the pipe-end sleeve section (1a) projecting from a stop (1d) has the larger radius (r1), the sleeve-end section (1b) has the smaller radius (r2), the articulation ball (2a) of the insertion pipe (R2) has a ball section (2a) on the pipe end with an external contour corresponding to the internal contour of the sleeve section (1b) and an external annular ball section (2b) with an external contour corresponding to the internal contour of the sleeve section (1a), with the sliding movement of the joint being restricted at both limit positions by means of the stops (1c) and (1d) for the annular section (2b) of the articulation ball (2).

3. The articulated pipe in accordance with claims 1 and 2, **characterised in that** the shoulder (1c) has a circular ring shape.

4. The articulated pipe in accordance with claims 1 to 3, **characterised in that** the shoulder (1c) has a truncated conical shape.

5. The articulated pipe in accordance with claims 1 to 4, **characterised in that** there is a stop (2d) on the insertion pipe end (R2) for the end section (lg) for which a bulge (le) is provided in order to increase the strength of the articulation sleeve (1) of the sleeve pipe (R1) and which serves as a stop at the same time.

6. The articulated pipe in accordance with claims 1 to 5, **characterised in that** the internal diameter (D1) of the pipe (R1) is equal to the internal diameter (D2) of the pipe (R2) and when the sleeve pipe (R1) is deflected by the maximum angle α in relation to the insertion pipe end (R2), the internal jacket line of the cup-shaped flare in the articulation ball (2a) on the shoulder (1d) flows into the internal jacket line of the sleeve pipe (R1).

7. The articulated pipe in accordance with claims 1 to 6, **characterised in that** the annular section (2b) of the articulation ball (2) slides over the internal contour of the internal sleeve section (1a) of the sleeve (1) and the articulation ball (2a) slides over the internal contour of the external sleeve section (1b) of the sleeve (1).

8. The articulated pipe in accordance with claims 1 to 7, **characterised in that** its parts consist of a plastic material which is flexible up to certain limits, and that the articulation ball (2) and the articulation sleeve (1) clip into one another to form a connection which cannot be released, with at least the external diameter of the intake cross-section (1f) of the articulation sleeve (1) being slightly smaller than the diameter of the articulation ball (2), and the section (2b) of the articulation ball (2) clips behind the shoulder (1c) of the articulation sleeve (1).

9. The articulated pipe in accordance with claims 1 to 8, **characterised in that** the section (2b) of the articulation ball (2) is formed as a complete ring.

10. The articulated pipe in accordance with claims 1 to 9, **characterised in that** the shoulder (1c) is formed as a complete ring.

## Revendications

1. Tube articulé composé d'éléments individuels pour gaines tire-fil ou autres, comportant à ses deux extrémités un manchon voire un embout et, entre les différents tubes, des joints d'articulation sphériques constitués de manchons articulés (1) et de rotules (2) comprenant respectivement deux secteurs différents de rayons distincts qui présentent chacun un rayon interne ou externe commun tandis que les secteurs de rayon identique sont opposés, possédant un centre (Z) commun autour duquel s'effectuent les mouvements de rotation et indissociablement verrouillé, **caractérisé par le fait** que l'étanchéité à la pression des joints d'articulation est assurée par une garniture d'étanchéité (3) prévue dans la zone d'articulation, que les surfaces internes des secteurs (1a,1b) du manchon articulé (1) et les surfaces externes des secteurs sphériques (2a,2b) de la rotule (2) constituent des surfaces de roulement pour les secteurs respectivement opposés, que les gradins (1c,2c) sont prévus comme butées entre les secteurs de manchon (1a, 1b) et les secteurs sphériques (2a,2b), qu'un gradin (1d) est disposé entre le corps du tube (R1) et le secteur de manchon (la) tandis qu'un secteur d'extrémité conique (1g) dirigé vers l'extérieur forme le prolongement du secteur de manchon (1b).

2. Tube articulé selon la revendication 1, **caractérisé par le fait** que la transition des deux secteurs (la), (1b) du manchon articulé (1) s'effectue de sorte que le secteur de manchon (la) côté tube partant d'une butée (1d) présente le rayon le plus grand (rl) et le secteur (1b) côté manchon le rayon le plus petit (r2), que la rotule (2a) du tube à emboîter présente côté tube un secteur sphérique (2a) dont la conformation extérieure correspond à la forme intérieure du secteur de manchon (1b) et un secteur sphérique annulaire externe (2b) dont la conformation extérieure correspond à la forme intérieure du secteur de manchon (la), le coulissement de l'articulation dans les deux positions extrêmes étant limité par les butées (1c) et (1d) pour le secteur annulaire (2b) de la rotule (2).

3. Tube articulé selon les revendications 1 et 2, **caractérisé par le fait** que le gradin (1c) est de forme circulaire.

4. Tube articulé selon les revendications 1 à 3, **caractérisé par le fait** que le gradin (1c) est de forme tronconique.

5. Tube articulé selon les revendications 1 à 4, **caractérisé par le fait** que l'extrémité du tube à emboîter (R2) comporte une butée (2d) pour le secteur d'extrémité (1g), lui-même doté d'un renflement (le) visant à augmenter la solidité du manchon articulé (1) du tube à manchon (R1) et servant en même temps de butée.

6. Tube articulé selon les revendications 1 à 5, **caractérisé par le fait** que le diamètre intérieur (D1) du tube (R1) est égal au diamètre intérieur (D2) du tube (R2) et qu'en cas de désaxement maximal, à un angle α, du tube à manchon (R1) par rapport au tube à emboîter (R2), la génératrice intérieure du renflement en forme de calice de la rotule (2a) s'inscrit dans le prolongement de la génératrice intérieure du tube à manchon (R1) au niveau du gradin (1d).

7. Tube articulé selon les revendications 1 à 6, **caractérisé par le fait** que le secteur annulaire (2b) de la rotule (2) roule sur la face interne du secteur intérieur (la) du manchon (1) et que la rotule (2a) roule sur la face interne du secteur extérieur (1b) du manchon (1).

8. Tube articulé selon les revendications 1 à 7, **caractérisé par le fait** que ses éléments sont constitués de matière plastique élastique dans certaines limites et que la rotule (2) et le manchon articulé (1) se verrouillent indissociablement, le diamètre extérieur de la section d'entrée (1f) du manchon articulé (1), pour le moins, étant un peu plus petit que le diamètre de la rotule (2) et le secteur (2b) de la rotule (2) s'encliquetant derrière le gradin (1c) du manchon articulé (1).

9. Tube articulé selon les revendications 1 à 8, **caractérisé par le fait** que le secteur (2b) de la rotule (2) se présente sous forme d'une bague discontinue.

10. Tube articulé selon les revendications 1 à 8, **caractérisé par le fait** que le gradin (1c) se présente sous forme d'une bague discontinue.
